# EUROPÄISCHE PATENTSCHRIFT

(11) **EP 2 532 220 B1**
(45) Veröffentlichungstag und Bekanntmachung des Hinweises auf die Patenterteilung: **26.03.2014**
(21) Anmeldenummer: 12401107.3
(22) Anmeldetag: 01.06.2012
(51) Int. Cl.: A01B 79/00, A01C 21/00

(54) **Landwirtschaftliche Feldspritze**
Agricultural field spraying device
Pulvérisateur agricole à cultures

(30) Priorität: 07.06.2011 DE 102011050885
(43) Veröffentlichungstag der Anmeldung: 12.12.2012
(73) Patentinhaber: Amazonen-Werke H. Dreyer GmbH & Co. KG, 49205 Hasbergen (DE)
(72) Erfinder: Walther, Steffen, 49205 Hasbergen (DE); Wernsmann, Daniel, 49082 Osnabrück (DE)

(56) Entgegenhaltungen:
- FR-A1- 2 911 596
- US-A- 4 100 538
- US-A1- 2009 139 436
- US-A1- 2011 015 831

## Beschreibung

Die Erfindung betrifft ein landwirtschaftliches Gerät mit Vorratsbehälter gemäß des Oberbegriffes des Patentanspruches 1.

Durch die US2011/0015831 A1 ist ein landwirtschaftliches Gerät mit Steuer- und Regeleinrichtung für Steuerung und Betriebsweise des Gerätes entsprechend des Oberbegriffes des Anspruches 1 bekannt.

Aus der europäischen Patentschrift EP 0 878 119 B1 ist ein Verfahren zum Steuern von landwirtschaftlichen Maschinen bekannt, mit Hilfe dessen vorausberechenbar ist, an welcher Stelle es sinnvoll ist, den Vorratsbehälter einer landwirtschaftlichen Verteilmaschine wieder aufzufüllen, um Leer- und Doppelfahrten innerhalb eines Feldes zu vermeiden. Dabei wird ein Positionsgeber verwendet, um festzustellen wo auf dem Feld sich die landwirtschaftliche Maschine befindet. Außerdem dient die geplante Fahrspur als Berechnungsgrundlage.

In der Offenlegungsschrift DE 10 2007 053 114 A1 wird eine landwirtschaftliche Feldspritze offenbart, bei der aus einem Speicher ein Programm abrufbar ist, so dass die Steuer- und/oder Regeleinheit der Feldspritze in der Lage ist, bei der Ausbringung der letzten Spritzmittelbehälterfüllung die Ausbringrate derart anzupassen, dass am Ende der Bearbeitung der landwirtschaftlichen Fläche das Spritzmittel in möglichst gleichmäßiger Weise ausgebracht wurde und dabei zumindest annähernd das gesamte angemischte Spritzmittel, insbesondere aus dem Spritzmitteltank ausgebracht ist.

Nachteilig ist bei diesen Erfindungen vor allem die mangelnde Flexibilität. Dieser Mangel wird bei der Betrachtung der Aufgabenlösung und der Vorstellung der Vorteile der Erfindung besonders deutlich.

Der Erfindung liegt die Aufgabe zugrunde, ein flexibles, insbesondere auf zeitliche Aspekte hin betrachtet vorteilhaftes ökonomisches Verfahren für das Ausbringen von Material bei landwirtschaftlichen Verteilmaschinen vorzuschlagen.

Diese Aufgabe wird erfindungsgemäß durch das Kennzeichen des Patentanspruches 1 gelöst. Es erfolgt eine Anzeige und/oder Warnung, insbesondere ein optisches und/oder akustisches Signal, wieviele Bearbeitungsstreifen noch bearbeitbar sind und/oder wenn eine festlegbare Anzahl nachfolgend zu bearbeitender Bearbeitungsstreifen, unter Berücksichtigung deren tatsächlicher Länge, der landwirtschaftlichen Fläche mit der gegenwärtigen Ausbringrate nicht mehr vollständig bearbeitbar ist, die über geeignete Mittel an die Bedienperson des landwirtschaftlichen Gerätes ausgebbar ist. Dadurch wird sichergestellt, dass die Bedienperson jederzeit entscheiden kann, ob ein Nachfüllen des Vorratsbehälters des landwirtschaftlichen Gerätes erfolgen sollte, wobei sie durch zuvor in den Bordcomputer eingebbare oder vom Bordcomputer durch geeignete Mittel messbare Daten unterstützt wird. Hierbei kann der Bordcomputer auch mögliche Alternativen vorschlagen.

Für alle Anpassungen der Ausbringrate sind Toleranzen frei wählbar, so dass festlegbare Grenzwerte nicht über- und/oder unterschritten werden. Dadurch werden beispielsweise Über- bzw. Unterdüngung verhindert.

Eingeb- und/oder messbare Daten umfassen insbesondere den gegenwärtigen Füllstand des Vorratsbehälters für auszubringendes Gut, die Ausbringrate und Arbeitsbreite, sowie die noch zu bearbeitende landwirtschaftliche Fläche, aufgeteilt in Bearbeitungsstreifen bestimmter Breite unter Einschluss deren tatsächlicher Länge.

Auf diese Weise kann sichergestellt werden, dass Bearbeitungsstreifen nur dann angefahren werden, wenn sie mit der in dem Vorratsbehälter noch befindlichen Menge von auszubringendem Gut noch vollständig bearbeitbar sind. Dadurch werden Fahrten in bereits bearbeiteten Bereichen der landwirtschaftlichen Fläche vermindert. Die Bearbeitung kann dadurch zeitsparend und boden- und/oder pflanzenschonend erfolgen. Die zeitsparende Bearbeitung reduziert Lohn- und/oder Betriebskosten, während die boden- und/oder pflanzenschonende Bearbeitung die durch die landwirtschaftlichen Flächen erwirtschaftbaren Erträge erhöhen kann.

Durch die Anzeige der noch bearbeitbaren Bearbeitungsstreifen wird eine größere Kontrolle über den Arbeitsvorgang bereitgestellt und die Bedienperson ist jederzeit auf kommende Nachfüllvorgänge vorbereitet.

Die Warnung bei dem Unterschreiten einer festlegbaren Anzahl noch bearbeitbarer Bearbeitungsstreifen stellt ein wichtiges Hilfsmittel für die Bedienperson dar. Sie stellt sicher, dass die Bearbeitung der landwirtschaftlichen Fläche genau dann unterbrochen wird, wenn die Unterbrechung zum Nachfüllen des Vorratsbehälters mit einer Zeitersparnis einhergeht. Dabei ist die Anzahl bearbeitbarer Bearbeitungsstreifen festlegbar, damit berücksichtigbar ist, auf welcher Feldseite sich Nachfüllvorrichtungen befinden.

In einer vorteilhaften Ausführung der Erfindung ist die Ausbringrate von Gut aus dem Vorratsbehälter derart anpassbar, dass ein und/oder mehrere bei der gegenwärtigen Ausbringrate nicht mehr vollständig zu bearbeitende/r Bearbeitungsstreifen noch vollständig bearbeitbar ist/sind. Dabei wird auf ein in dem Bordcomputer hinterlegtes Programm zurückgegriffen. Die Bearbeitung der landwirtschaftlichen Fläche kann dadurch noch zeitsparender erfolgen. Es wird dadurch vermieden, dass ein Nachfüllvorgang eingeleitet wird, wenn nur geringfügig mehr Gut ausgebracht werden müsste als vorhanden ist. Befindet sich im Vorratsbehälter beispielsweise noch auszubringendes Gut für 1,9 Bearbeitungsstreifen, so müsste spätestens nach der Bearbeitung von einem Bearbeitungsstreifen Gut nachgefüllt werden, wenn später keine bereits bearbeiteten Teile der landwirtschaftlichen Fläche wiederholt abgefahren werden sollen. Wird jedoch die Ausbringrate auf 95% des ursprünglichen Wertes verringert, so können noch zwei Bearbeitungsstreifen vollständig bearbeitet werden und erst danach muss ein Nachfüllen erfolgen. Insgesamt muss der Vorratsbehälter dadurch seltener nachgefüllt werden. Die Anpassung der Ausbringrate und/oder die Entscheidung darüber, wann die Anpassung der Ausbringrate erfolgen soll, kann manuell oder automatisch erfolgen.

In einer vorteilhaften Ausführung der Erfindung ist die Ausbringrate von Gut aus dem Vorratsbehälter derart anpassbar, dass nach dem Bearbeiten einer festlegbaren Anzahl von Bearbeitungsstreifen, insbesondere nach dem Bearbeiten des letzten Bearbeitungsstreifens, das gesamte Gut aus dem Vorratsbehälter und/oder den Verteilorganen ausgebracht ist. Das kann durch eine Reduktion der Ausbringrate wie oben beschrieben erfolgen. Die Ausbringrate kann analog jedoch auch erhöht werden, so dass der Vorratsbehälter und/oder die Verteilorgane nach dem Bearbeiten des letzten Bearbeitungsstreifens zumindest annähernd vollständig entleert sind. Sind Beispielsweise bei dem Ausbringen von Spritzmittel mit einer landwirtschaftlichen Feldspritze noch genau 2 Bearbeitungsstreifen zu bearbeiten, wobei noch Spritzmittel für 2,1 Bearbeitungsstreifen im Vorratsbehälter und/oder den Verteilorganen zur Verfügung stehen, so kann die Ausbringrate auf 105% des ursprünglichen Wertes erhöht werden, so dass am Ende des Verteilvorganges der Vorratsbehälter und/oder die Verteilorgane zumindest annähernd vollständig von Spritzmittel entleert sind. Dadurch wird am Ende der Bearbeitung der landwirtschaftlichen Fläche kein Mittel unnötigerweise umher transportiert. Durch die Entleerung von Vorratsbehälter und Verteilorganen kann eine Reinigung der landwirtschaftlichen Maschine bereits durchgeführt sein oder in einfacher Weise nachfolgen. Die Anpassung der Ausbringrate und/oder die Entscheidung darüber, wann die Anpassung der Ausbringrate erfolgen soll, kann manuell oder automatisch erfolgen.

In einer vorteilhaften Ausführung der Erfindung können über den Bordcomputer auf einer digitalisierten Karte der landwirtschaftlichen Fläche Bereiche als Nachfüllpunkte markiert werden, so dass über im Speicher des Bordcomputers hinterlegte Programme eine Auswertung erfolgen kann, die aufgrund der Lage dieser Nachfüllpunkte ergibt, wann und/oder wo ein Nachfüllen des Vorratsbehälters zeitsparend durchführbar ist. Dazu ist über den Bordcomputer zu geeigneter Zeit ein dementsprechendes Signal, insbesondere ein optisches und/oder akustisches Signal, über geeignete Mittel ausgebbar.

In einer vorteilhaften Ausführung der Erfindung kann der Bordcomputer über eine in seinem Speicher hinterlegte und über einen Bildschirm ausgebbare digitalisierte Karte der landwirtschaftlichen Fläche und/oder oder andere geeignete Mittel alternative Routen vorschlagen, die zu einer Zeitersparnis bei der Bearbeitung der Fläche führen. Hat die zu bearbeitende Fläche beispielsweise zumindest teilweise eine Keilform, so ist für die Bearbeitung eines im Keil liegenden Bearbeitungsstreifens weniger Gut aus dem Vorratsbehälter nötig, als für einen vollständigen Bearbeitungsstreifen, der nicht im Keil liegt. Ist im Vorratsbehälter nur noch Gut für die Bearbeitung von weniger als einem Bearbeitungsstreifen vorhanden, so könnte beispielsweise ein im Keil liegender Bearbeitungsstreifen aufgrund seiner insgesamt geringeren Fläche noch bearbeitbar sein.

Weitere Einzelheiten der Erfindung sind der Beispielsbeschreibung und den Zeichnungen zu entnehmen. Hierbei zeigen
- Fig. 1: eine rechteckige landwirtschaftliche Fläche und eine landwirtschaftliche Feldspritze, deren Vorratsbehälter noch genug Mittel enthält, um 0,75 Bearbeitungsstreifen zu bearbeiten,
- Fig. 2: eine rechteckige landwirtschaftliche Fläche und eine landwirtschaftliche Feldspritze, deren Vorratsbehälter noch genug Mittel enthält, um 1,5 Bearbeitungsstreifen zu bearbeiten,
- Fig. 3: eine in Teilbereichen keilförmige landwirtschaftliche Fläche und eine landwirtschaftliche Feldspritze, deren Vorratsbehälter noch genug Mittel enthält, um 0,75 Bearbeitungsstreifen zu bearbeiten,
- Fig. 4: eine rechteckige landwirtschaftliche Fläche und eine landwirtschaftliche Feldspritze, deren Vorratsbehälter noch genug Mittel enthält, um 1,9 Bearbeitungsstreifen zu bearbeiten,
- Fig. 5: eine rechteckige landwirtschaftliche Fläche und eine landwirtschaftliche Feldspritze, deren Vorratsbehälter noch genug Mittel enthält, um 1,1 Bearbeitungsstreifen zu bearbeiten, während nur noch ein Bearbeitungsstreifen auf der Fläche zu bearbeiten ist,
wobei jeweils die Anzahl der mit der gegenwärtig im Vorratsbehälter befindlichen Menge von Spritzmittel noch bearbeitbaren Bearbeitungsstreifen angegeben ist.

In allen Figuren sind die zu verwendenden Fahrgassen mit schwarz gestrichelten Linien skizzenhaft angedeutet. Hellgrau sind Bereiche der landwirtschaftlichen Fläche markiert, die bereits bearbeitet wurden bzw. nicht bearbeitet werden sollen. Dunkelgrau sind Bereiche der landwirtschaftlichen Fläche markiert, die mit dem zum jeweiligen Zeitpunkt noch im Vorratsbehälter der landwirtschaftlichen Feldspritze befindlichen Mittel noch bearbeitbar sind. Weiß sind Bereiche der landwirtschaftlichen Fläche dargestellt, die mit dem zum jeweiligen Zeitpunkt noch im Vorratsbehälter der landwirtschaftlichen Feldspritze befindlichen Mittel nicht mehr bearbeitbar sind.

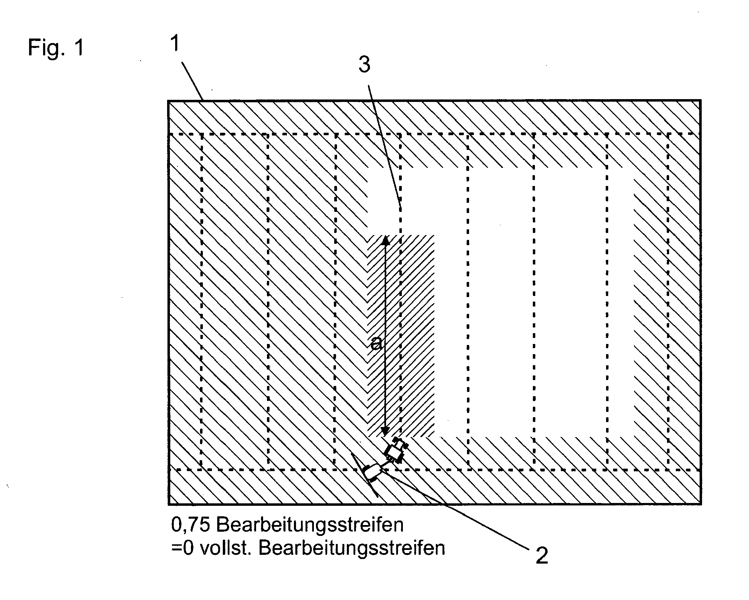

Fig. 1 zeigt eine rechteckige landwirtschaftliche Fläche 1 und eine landwirtschaftliche Feldspritze 2, deren Vorratsbehälter noch genug Mittel enthält, um 0,75 Bearbeitungsstreifen 3 zu bearbeiten. Wird der Bearbeitungsstreifen 3 angefahren, so muss er nach dem Auffüllen des Vorratsbehälters noch einmal angefahren werden. 75% des Bearbeitungsstreifens 3, die Strecke a, werden dabei unnötiger Weise doppelt angefahren. Dementsprechend erfolgt über den Bordcomputer eine Anzeige, dass kein Bearbeitungsstreifen mehr vollständig bearbeitbar ist und/oder dass nur noch 0,75 Bearbeitungsstreifen bearbeitbar sind und/oder es erfolgt eine Warnung über geeignete Mittel, beispielsweise optische und/oder akustische Signale, so dass die Situation für die Bedienperson eindeutig erkennbar ist. Die Bedienperson kann also den Spritzvorgang abbrechen, bevor der Bearbeitungsstreifen angefahren wird und stattdessen den Vorratsbehälter nachfüllen. Beim darauf folgenden Anfahren kann zumindest dieser Bearbeitungsstreifen vollständig bearbeitet werden. Daraus resultiert eine Zeitersparnis durch das Vermeiden des unnötigen mehrfachen Abfahrens der Strecke a.

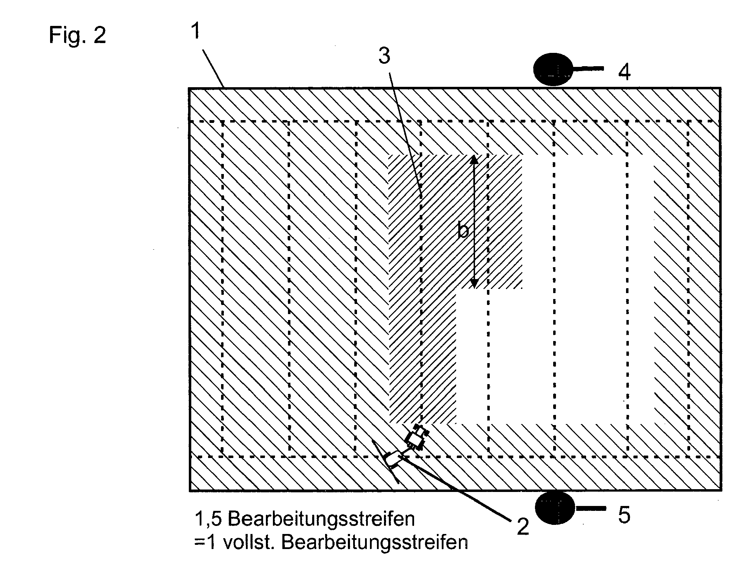

Fig. 2 zeigt eine rechteckige landwirtschaftliche Fläche 1 und eine landwirtschaftliche Feldspritze 2, deren Vorratsbehälter noch genug Mittel enthält, um 1,5 Bearbeitungsstreifen 3 zu bearbeiten. Ein Anfahren des nachfolgenden Bearbeitungsstreifens 3 ist nur dann günstig, wenn auf der derzeit der Feldspritze gegenüberliegenden Feldseite ein Nachfüllpunkt 4 für das Nachfüllen des Vorratsbehälters vorhanden ist. Ist ein Nachfüllpunkt 5 für das Nachfüllen des Vorratsbehälters ausschließlich auf der Feldseite vorhanden, auf der sich die Feldspritze derzeit befindet, so ist das Anfahren des Bearbeitungsstreifens 3 ungünstig, da sonst 50% des nachfolgend zu bearbeitenden Bearbeitungsstreifens, also die Strecke b, unnötiger Weise zweifach angefahren werden müsste.

In diesem Fall erfolgt über den Bordcomputer eine Anzeige, dass nur noch ein Bearbeitungsstreifen vollständig bearbeitbar ist und/oder dass nur noch 1,5 Bearbeitungsstreifen bearbeitbar sind und/oder es erfolgt eine Warnung über geeignete Mittel, beispielsweise optische und/oder akustische Signale, so dass die Situation für die Bedienperson eindeutig erkennbar ist. Die Bedienperson kann also den Spritzvorgang abbrechen, bevor der Bearbeitungsstreifen angefahren wird und stattdessen den Vorratsbehälter nachfüllen. Beim darauf folgenden Anfahren können zumindest die beiden Bearbeitungsstreifen vollständig bearbeitet werden. Daraus resultiert eine Zeitersparnis durch das Vermeiden des unnötigen mehrfachen Abfahrens der Strecke b.

Ist auch ein Nachfüllpunkt 4 für das Nachfüllen auf der der Feldspritze derzeit gegenüberliegenden Feldseite vorhanden, liegt eine zu der in Fig. 1 dargestellten analoge Situation vor, bei der im Falle des nicht rechtzeitigen Nachfüllens die Strecke b unnötiger Weise mehrfach abgefahren würde.

Sowohl die genaue Lage als auch die Größe und Details zu der Erreichbarkeit der im Bordcomputer einstellbaren Nachfüllpunkte sind frei wählbar. Dadurch kann der Bordcomputer aufgrund eines in seinem Speicher hinterlegtem Programm jederzeit berechnen, zu welchem Zeitpunkt ein Nachfüllvorgang zeitsparend und fahrtechnisch günstig durchführbar ist und die Information darüber über geeignete Mittel an die Bedienperson ausgeben.

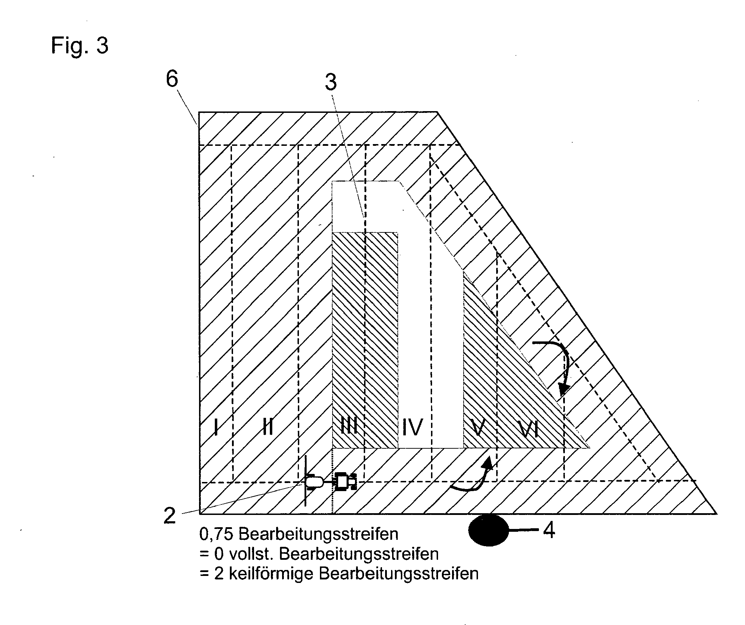

Fig. 3 zeigt eine in Teilbereichen keilförmige landwirtschaftliche Fläche 6 und eine landwirtschaftliche Feldspritze 2, deren Vorratsbehälter noch genug Mittel enthält, um 0,75 Bearbeitungsstreifen 3 zu bearbeiten. Die vollständigen Bearbeitungsstreifen I und II wurden bereits bearbeitet. Der vollständige Bearbeitungsstreifen III kann mit dem noch im Vorratsbehälter befindlichen Mittel noch zu 75% bearbeitet werden. Über den Bordcomputer wird rechtzeitig vorgeschlagen anstatt des vollständigen Bearbeitungsstreifens III die keilförmigen Bearbeitungsstreifen V und VI anzufahren, die noch beide mit dem im Vorratsbehälter befindlichen Mittel bearbeitbar sind. Eine derartige Route kann beispielsweise über ein Display des Bordcomputers ausgegeben werden, auf dem die landwirtschaftliche Fläche 6 dargestellt ist, wobei die Route durch Pfeile, wie in der Fig. 3 angegeben ist, ausgegeben wird. Nach der Bearbeitung der beiden keilförmigen Bearbeitungsstreifen befindet sich die Feldspritze auf der Feldseite des Nachfüllpunktes 4. Auf diese Weise kann eine größere Feldfläche vor dem Nachfüllen bearbeitet werden. Die Gesamtanzahl von Nachfüllvorgängen ist dadurch reduzierbar, wodurch eine Reduktion der für die Bearbeitung notwendigen Zeit erreichbar ist.

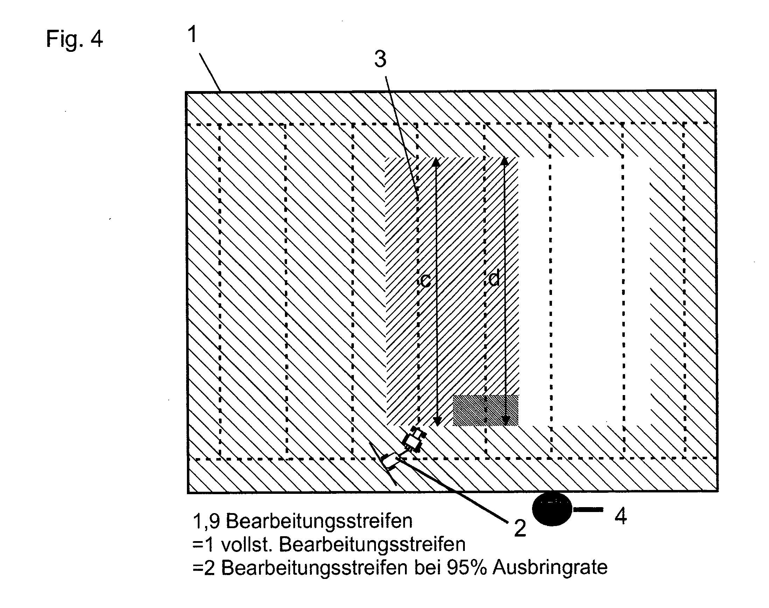

Fig. 4 zeigt eine rechteckige landwirtschaftliche Fläche 1 und eine landwirtschaftliche Feldspritze 2, deren Vorratsbehälter noch genug Mittel enthält, um 1,9 Bearbeitungsstreifen 3 zu bearbeiten. Der schwarz markierte Bereich des als zweites anzufahrenden Bearbeitungsstreifens 3 kann mit dem im Vorratsbehälter befindlichen Mittel nicht mehr bearbeitet werden, es müsste also, um Zeit zu sparen, am Nachfüllpunkt 4 Mittel nachgefüllt werden. Dadurch würde aber das Vorratsbehältervolumen nicht vollständig ausgenutzt werden. Die Lösung liegt in einer kleinen Verringerung der Ausbringrate. Durch die Verringerung der Ausbringrate auf 95% der ursprünglichen Ausbringrate, während die beiden Bearbeitungsstreifen, d.h. die Strecke c plus die Strecke d, bearbeitet werden, ist auch dieser schwarz markierte Bereich noch bearbeitbar, bevor der Vorratsbehälter mit Mittel wieder aufzufüllen ist. Dadurch sind zwei vollständige Bearbeitungsstreifen 3 zusätzlich bearbeitbar, bevor der Vorratsbehälter aufgefüllt werden muss. Damit geht eine deutliche Zeitersparnis einher. Dazu kann über ein im Speicher des Bordcomputers hinterlegtes Programm eine Berechnung erfolgen, gemäß der ein Zeitpunkt bestimmt wird, zu dem eine Anpassung der Ausbringrate sinnvoll ist, d.h. zu welchem Zeitpunkt mit der Anpassung eine Zeitersparnis einher geht. Dabei werden in dem Speicher hinterlegbare Toleranzbereiche für die Ausbringrate eingehalten. Dadurch wird ein übermäßiges und/oder ungenügendes Ausbringen von Mittel verhindert.

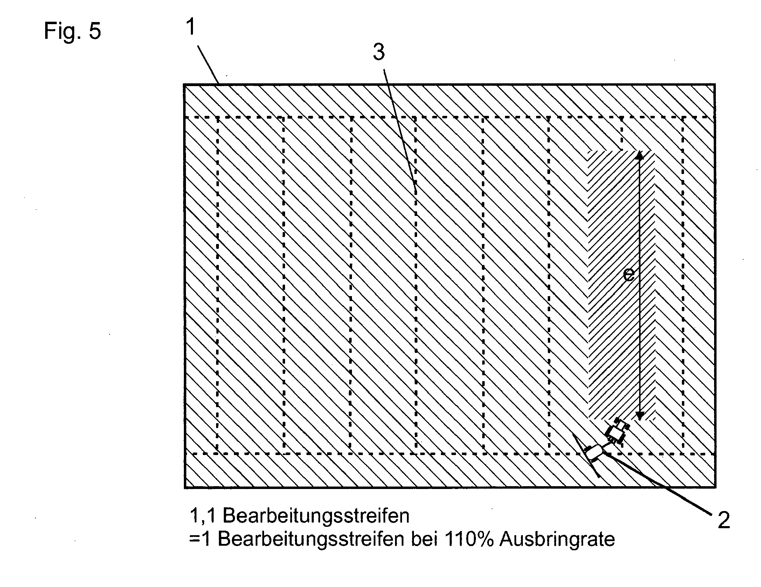

Fig. 5 zeigt eine rechteckige landwirtschaftliche Fläche 1 und eine landwirtschaftliche Feldspritze 2, deren Vorratsbehälter noch genug Mittel enthält, um 1,1 Bearbeitungsstreifen 3 zu bearbeiten. Bei der gegenwärtigen Ausbringrate würde nach der Bearbeitung des letzten Bearbeitungsstreifens noch genug Mittel zurückbleiben, um 0,1 Bearbeitungsstreifen zu bearbeiten. Um jedoch den Vorratsbehälter und/oder das Spritzgestänge von Mittel zu reinigen, ist der Vorratsbehälter und/oder das Spritzgestänge vollständig von Mittel freimachbar, indem die Ausbringrate zu Beginn der Strecke e über deren gesamte Länge auf 110% des ursprünglichen Wertes angehoben wird. Durch das damit erfolgte, automatische und durch ein im Speicher des Bordcomputers hinterlegtes Programm gesteuerte Reinigen der Feldspritze am Ende des Ausbringvorganges wird Arbeitszeit eingespart. Dabei werden in dem Speicher hinterlegbare Toleranzbereiche für die Ausbringrate eingehalten. Dadurch wird ein übermäßiges und/oder ungenügendes Ausbringen von Mittel verhindert.

Über ein Display des Bordcomputers sind zu den Darstellungen in den vorbeschriebenen Figuren analoge Darstellungen der landwirtschaftlichen Fläche 1, 6 und/oder der landwirtschaftlichen Feldspritze 2 ausgebbar. Dabei ist die landwirtschaftliche Fläche als digitalisierte Karte im Speicher des Bordcomputers hinterlegt. Die Positionsbestimmung der landwirtschaftlichen Feldspritze kann beispielsweise per Satellitennavigationssystem, z.B. GPS, erfolgen. Auf diesen Darstellungen können durch die Bedienperson die Nachfüllpunkte markiert und/oder der Bearbeitungsprozess verfolgt werden. Optische Anzeigen, beispielsweise zu geplanten und/oder alternativen Routen, und/oder Warnungen können über das Display erfolgen.

Um die oben genannten Schritte durchzuführen sind eine Vielzahl von Daten messbar und/oder im Speicher des Bordcomputers hinterlegbar. Wichtige mess- und/oder hinterlegbare Daten sind beispielsweise die Arbeitsbreite der Feldspritze, die Maße der Bearbeitungsstreifen, insbesondere ihre Länge, wobei ihre Breite bereits aus der Arbeitsbreite resultiert, der Füllstand des Spritzmittelvorratsbehälters, die Ausbringrate. Die gemessenen und/oder hinterlegten Daten sind über das Display des Bordcomputers jederzeit abrufbar.

Bei der Verwendung von einem Satellitennavigationssystem kann über die bereits beschriebenen Funktionen hinaus ein Programm im Bordcomputer hinterlegt sein, über welches gesteuert wird, dass das Ausbringen von Mittel automatisch begonnen wird, sobald zu bearbeitende Bereiche der landwirtschaftlichen Fläche 1, 6 erreicht werden, wobei das Mittel vorzugsweise ohne Verzögerung ausbringbar ist.

Analog dazu kann ein Satellitennavigationssystem mit Hilfe eines im Bordcomputer hinterlegten Programms dafür verwendet werden, dass das Ausbringen von Material unterbrochen wird, wenn zu bearbeitende Bereiche der landwirtschaftlichen Fläche 1, 6 verlassen werden.

## Patentansprüche

1. Landwirtschaftliches Gerät, das mindestens einen Vorratsbehälter für auszubringendes Gut, insbesondere flüssiges und/oder körniges und/oder pulverförmiges Gut, zumindest eine mit dem Behälter verbundene Ausbringvorrichtung und eine vorzugsweise als Bordcomputer ausgebildete elektronische Steuer- und/oder Regeleinrichtung zum Steuern und/oder Regeln der Betriebsweise des Gerätes während des Ausbringvorganges, sowie Mitteln zum Steuern und/oder Regeln des Ausbringvorganges, wobei diese Mittel von der Steuer- und/oder Regeleinheit ansteuerbar sind, wobei die Steuer- und/oder Regeleinheit zumindest einen Speicher, in dem zumindest ein Programm mit vorzugsweise verschiedenen Betriebsweisen des Gerätes hinterlegt sind, aufweist, wobei Mittel vorhanden sind, mit denen der gegenwärtige Füllstand des Vorratsbehälters für auszubringendes Gut, die Ausbringrate und Arbeitsbreite, sowie die noch zu bearbeitende landwirtschaftliche Fläche (1, 6), aufgeteilt in Bearbeitungsstreifen (3) bestimmter Breite unter Einschluss deren tatsächlicher Länge bestimmbar sind, wobei über ein in dem Bordcomputer hinterlegtes Programm bestimmbar ist, wieviele Bearbeitungsstreifen (3) auf der landwirtschaftlichen Fläche (1, 6) mit der gegenwärtigen Füllung des Vorratsbehälters noch bearbeitet werden können, wobei über den Bordcomputer eine Anzeige und/oder Warnung, insbesondere ein optisches und/oder akustisches Signal, über geeignete Mittel an die Bedienperson des landwirtschaftlichen Gerätes ausgebbar ist, wieviele Bearbeitungsstreifen (3) noch bearbeitbar sind und/oder wenn eine festlegbare Anzahl nachfolgend zu bearbeitender Bearbeitungsstreifen (3), unter Berücksichtigung deren tatsächlicher Länge, der landwirtschaftlichen Fläche (1, 6) mit der gegenwärtigen Ausbringrate nicht mehr vollständig bearbeitbar ist, **dadurch gekennzeichnet, dass** ein Toleranzbereich für die Ausbringrate festlegbar ist, der bei Anpassungen der Ausbringrate durch die in dem Bordcomputer hinterlegten Programme eingehalten wird.

2. Landwirtschaftliches Gerät nach Anspruch 1, **dadurch gekennzeichnet, dass** über ein in dem Bordcomputer hinterlegtes Programm die Ausbringrate derart anpassbar ist, dass ein und/oder mehrere bei der gegenwärtigen Ausbringrate nicht mehr vollständig zu bearbeitende/r Bearbeitungsstreifen (4) noch vollständig bearbeitbar ist/sind, wobei der Zeitpunkt der Anpassung manuell und/oder automatisch über ein im Bordcomputer hinterlegtes Programm festlegbar ist.

3. Landwirtschaftliches Gerät nach zumindest einem der vorangehenden Ansprüche, **dadurch gekennzeichnet, dass** über ein in dem Bordcomputer hinterlegtes Programm die Ausbringrate derart anpassbar ist, dass bei Erreichen des Endes eines bearbeiteten Bearbeitungsstreifens (9) und/oder zu bearbeitenden Fläche (1, 6) der Vorratsbehälter zumindest annähernd vollständig geleert ist, wobei der Zeitpunkt der Anpassung manuell und/oder automatisch über ein im Bordcomputer hinterlegtes Programm festlegbar ist.

4. Landwirtschaftliches Gerät nach zumindest einem der vorangehenden Ansprüche, **dadurch gekennzeichnet, dass** Nachfüllpunkte (4, 5) auf der abzuarbeitenden Feldfläche (1, 6) festlegbar sind, an denen Mittel in den Vorratsbehälter nachfüllbar ist, so dass über ein in dem Bordcomputer hinterlegtes Programm berechenbar ist, zu welchem Zeitpunkt das Nachfüllen zeitsparend erfolgen kann, wobei über den Bordcomputer zu geeigneter Zeit ein dementsprechendes Signal, insbesondere ein optisches und/oder akustisches Signal, über geeignete Mittel ausgebbar ist.

5. Landwirtschaftliches Gerät nach zumindest einem der vorangehenden Ansprüche, **dadurch gekennzeichnet, dass** über ein in dem Bordcomputer hinterlegtes Programm alternative Routen zu einer Route zum Bearbeiten der Bearbeitungsstreifen (3) auf landwirtschaftlichen Flächen, insbesondere auf zumindest in Teilbereichen keilförmigen landwirtschaftlichen Flächen (6), vorschlagbar sind, bei der ein Bearbeitungsstreifen nach dem anderen bearbeitet wird.

6. Landwirtschaftliches Gerät nach zumindest einem der vorangehenden Ansprüche, **dadurch gekennzeichnet, dass** das landwirtschaftliche Gerät eine landwirtschaftliche Feldspritze (2) ist, wobei die Reinigung des Spritzmittelkreises und/oder des Spritz- und/oder Flüssigkeitsbehälters der landwirtschaftlichen Feldspritze (2) über ein im Bordcomputer hinterlegtes Programm durchführbar ist, und zwar derart, dass die Reinigung während oder nach Beendigung der Ausbringung der letzten Füllung des als Spritz- und/oder Flüssigkeitsbehälter ausgebildeten Vorratsbehälters erfolgt.

7. Landwirtschaftliches Gerät nach zumindest einem der vorangehenden Ansprüche 1 bis 5, **dadurch gekennzeichnet, dass** das landwirtschaftliche Gerät eine landwirtschaftliche Verteilmaschine, insbesondere ein Schleuderdüngerstreuer und/oder eine Sämaschine, ist, wobei der Vorratsbehälter als Behälter für mit der Verteilmaschine verteilbares Gut ausgebildet ist.

## Claims

1. Agricultural apparatus which has at least one storage container for material to be output, in particular liquid and/or granular and/or pulverulent material, at least one output device which is connected to the container, and an electronic controller and/or regulating device, which is preferably designed as an on-board computer, for controlling and/or regulating the operating mode of the apparatus during the output operation, and means for controlling and/or regulating the output operation, wherein said means are activatable by the control and/or regulating unit, wherein the control and/or regulating unit has at least one memory in which at least one program with preferably different operating modes of the apparatus is stored, wherein there are means with which it is possible to determine the current filling level of the storage container for material to be output, the output rate and the working width, and also the agricultural area (1, 6) which is still to be cultivated, divided into cultivation strips (3) of a certain width, including the actual length of said strips, wherein it is possible to determine via a program stored in the on-board computer how many cultivation strips (3) on the agricultural area (1, 6) can still be cultivated with the current filling of the storage container, wherein the on-board computer is used to issue, via suitable means, an indication and/or warning, in particular an optical and/or acoustic signal, to the operator of the agricultural apparatus as to how many cultivation strips (3) can still be cultivated, and/or if a determinable number of cultivation strips (3), which are to be cultivated subsequently, taking into consideration the actual length of said strips, of the agricultural area (1, 6) can no longer be fully cultivated at the current output rate, **characterized in that** a tolerance range can be determined for the output rate, said tolerance range being kept to during adaptations of the output rate by the programs stored in the on-board computer.

2. Agricultural apparatus according to Claim 1, **characterized in that** the output rate can be adapted via a program stored in the on-board computer in such a manner that one and/or more cultivation strips (4) which can no longer be completely cultivated at the current output rate can still be completely cultivated, wherein the adaptation moment can be determined manually and/or automatically via a program stored in the on-board computer.

3. Agricultural apparatus according to at least either of the preceding claims, **characterized in that** the output rate can be adapted via a program stored in the on-board computer in such a manner that, when the end of a cultivated cultivation strip (9) and/or an area (1, 6) to be cultivated is reached, the storage container is at least approximately completely emptied, wherein the adaptation moment can be determined manually and/or automatically via a program stored in the on-board computer.

4. Agricultural apparatus according to at least one of the preceding claims, **characterized in that** refilling points (4, 5) can be determined on the field area (1, 6) to be worked, at which refilling points means can be refilled into the storage container such that it is possible to calculate via a program stored in the on-board computer at which moment the refilling can take place in a time-saving manner, wherein a corresponding signal, in particular an optical and/or acoustic signal, can be issued by the on-board computer via suitable means at a suitable time.

5. Agricultural apparatus according to at least one of the preceding claims, **characterized in that** a program stored in the on-board computer can be used to propose alternative routes to a route for cultivating the cultivation strips (3) in agricultural areas, in particular in agricultural areas (6) which are wedge-shaped at least in partial regions, on which route one cultivation strip after the other is cultivated.

6. Agricultural apparatus according to at least one of the preceding claims, **characterized in that** the agricultural apparatus is an agricultural field spraying device (2), wherein the cleaning of the spraying-agent circuit and/or the spraying and/or liquid container of the agricultural field spraying device (2) can be carried out via a program stored in the on-board computer, specifically in such a manner that the cleaning takes place during and/or after the end of the output of the final filling of the storage container, which is designed as a spraying and/or liquid container.

7. Agricultural apparatus according to at least one of the preceding Claims 1 to 5, **characterized in that** the agricultural apparatus is an agricultural distributing machine, in particular a fertilizer broadcaster and/or a sowing machine, wherein the storage container is designed as a container for material which can be distributed by the distributing machine.

## Revendications

1. Appareil agricole, comprenant au moins un réservoir de stockage pour la matière à épandre, notamment de la matière sous forme de liquide et/ou de granulés et/ou de poudre, au moins un dispositif d'épandage relié au réservoir et un équipement de commande et/ou de régulation électronique de préférence réalisé sous la forme d'un ordinateur de bord pour commander et/ou réguler le mode de fonctionnement de l'appareil pendant l'opération d'épandage, ainsi que des moyens pour commander et/ou réguler l'opération d'épandage, ces moyens pouvant être commandés par le module de commande et/ou de régulation, le module de commande et/ou de régulation présentant au moins une mémoire dans laquelle est stocké au moins un programme avec de préférence plusieurs modes de fonctionnement de l'appareil, des moyens étant présents avec lesquels peuvent être déterminés le niveau actuel du réservoir de stockage pour la matière à épandre, le débit d'épandage et la largeur de travail ainsi que la surface agricole (1, 6) qui reste à traiter, divisée en bandes de traitement (3) de largeur donnée en incluant leur longueur réelle, le nombre de bandes de traitement (3) qui peuvent encore être traitées sur la surface agricole (1, 6) avec la charge actuelle du réservoir de stockage pouvant être déterminé par le biais d'un programme stocké dans l'ordinateur de bord, une indication et/ou une alerte, notamment un signal visuel et/ou sonore pouvant être délivré à l'opérateur de l'appareil agricole par des moyens appropriés pour indiquer le nombre de bandes de traitement (3) peuvant encore être traitées et/ou lorsqu'un nombre pouvant être défini de bandes de traitement (3) à traiter ensuite, en tenant compte de leur longueur réelle, de la surface agricole (1, 6) ne peuvent plus être traitées entièrement avec le débit d'épandage actuel, **caractérisé en ce qu'**une plage de tolérance peut être fixée pour le débit d'épandage, laquelle est respectée lors des adaptations du débit d'épandage par les programmes stockés dans l'ordinateur de bord.

2. Appareil agricole selon la revendication 1, **caractérisé en ce que** le débit d'épandage peut être adapté par le biais d'un programme stocké dans l'ordinateur de bord de telle sorte qu'une et/ou plusieurs bandes de traitement (4) qui ne peuvent plus être traitées entièrement avec le débit d'épandage actuel peut/peuvent encore être entièrement traitée(s), le moment de l'adaptation pouvant être défini manuellement et/ou automatiquement par le biais d'un programme stocké dans l'ordinateur de bord.

3. Appareil agricole selon au moins l'une des revendications précédentes, **caractérisé en ce que** le débit d'épandage peut être adapté par le biais d'un programme stocké dans l'ordinateur de bord de telle sorte que lorsque la fin d'une bande de traitement (9) traitée et/ou de la surface à traiter (1, 6) est atteinte, le réservoir de stockage est au moins presque entièrement vidé, le moment de l'adaptation pouvant être défini manuellement et/ou automatiquement par le biais d'un programme stocké dans l'ordinateur de bord.

4. Appareil agricole selon au moins l'une des revendications précédentes, **caractérisé en ce que** des points de ravitaillement (4, 5) auxquels peuvent être ravitaillés les moyens dans le réservoir de stockage peuvent être définis sur la surface agraire à traiter (1, 6), de sorte qu'il soit possible de calculer par le biais d'un programme stocké dans l'ordinateur de bord à quel moment le ravitaillement peut être effectué en gagnant du temps, un signal en conséquence, notamment un signal sonore et/ou visuel pouvant être délivré par des moyens appropriés au moment adéquat par le biais de l'ordinateur de bord.

5. Appareil agricole selon au moins l'une des revendications précédentes, **caractérisé en ce que** des trajets alternatifs à un trajet de traitement des bandes de traitement (3) sur les surfaces agricoles, notamment sur au moins des zones partielles de surfaces agricoles cunéiformes (6), peuvent être proposés par le biais d'un programme stocké dans l'ordinateur de bord, avec lesquels une bande de traitement est traitée après l'autre.

6. Appareil agricole selon au moins l'une des revendications précédentes, **caractérisé en ce que** l'appareil agricole est un pulvérisateur agricole (2), le nettoyage du circuit du produit pulvérisé et/ou du réservoir de pulvérisation et/ou à liquide du pulvérisateur agricole (2) pouvant être effectué par le biais d'un programme stocké dans l'ordinateur de bord, et ce de telle sorte que le nettoyage s'effectue pendant ou après la fin de l'épandage de la dernière charge du réservoir de stockage réalisé sous la forme d'un réservoir de pulvérisation et/ou à liquide.

7. Appareil agricole selon au moins l'une des revendications 1 à 5, **caractérisé en ce que** l'appareil agricole est une machine de distribution agricole, notamment un épandeur d'engrais centrifuge et/ou un semoir, le réservoir de stockage étant configuré en tant que réservoir pour la matière qui peut être épandue avec la machine de distribution.
